# FASCICULE DE BREVET EUROPEEN

(11) **EP 2 091 804 B1**
(45) Date de publication et mention de la délivrance du brevet: **02.06.2010**
(21) Numéro de dépôt: 07858672.4
(22) Date de dépôt: 07.11.2007
(51) Int. Cl.: B62D 21/00, B62D 21/02, B62D 21/05, B62D 21/06

(54) **DISPOSITIF DE SUPPORT DE TRAIN ARRIERE, PARTIE ARRIERE D'UN VEHICULE AUTOMOBILE, ET VEHICULE AUTOMOBILE COMPRENANT CETTE PARTIE ARRIERE**
TRAGEVORRICHTUNG FÜR EINEN HECKUNTERRAHMEN, HECKTEIL EINES KRAFTFAHRZEUGS UND MIT DEM HECKTEIL AUSGESTATTETES KRAFTFAHRZEUG
SUPPORT DEVICE FOR A REAR SUBFRAME, REAR SECTION OF A MOTOR VEHICLE AND MOTOR VEHICLE COMPRISING SAID REAR SECTION

(30) Priorité: 23.11.2006 FR 0655077
(43) Date de publication de la demande: 26.08.2009
(73) Titulaire: PEUGEOT CITROËN AUTOMOBILES S.A., 78140 Vélizy Villacoublay (FR)
(72) Inventeur: CADET, Stéphane, 28700 Denonville (FR)
(86) Numéro de dépôt international: PCT/FR2007/052310
(87) Numéro de publication internationale: WO 2008/062126

(56) Documents cités:
- DE-A1- 3 525 251
- DE-A1- 3 810 867
- FR-A- 667 735

## Description

La présente invention concerne un dispositif de support de train arrière d'un véhicule automobile.

L'invention s'applique tout particulièrement dans le cas des trains arrière à traverse déformable.

Il est connu de l'état de la technique un dispositif de support de train arrière d'un véhicule automobile, du type comprenant :
- un bas de caisse longitudinal muni d'une extrémité arrière,
- un longeronnet comprenant :

- une portion longitudinale s'étendant à l'arrière du bas de caisse et décalée transversalement par rapport à ce bas de caisse, et
- une portion de jonction avec le bas de caisse, fixée sur un côté du bas de caisse, et
- une articulation destinée à être reliée au train arrière, comprenant des premier et second points d'attache, le premier point d'attache étant fixé à une première surface définie sur le longeronnet.

Dans ce dispositif connu, le longeronnet a une section rectangulaire, et sa portion de jonction présente un évasement en direction du bas de caisse afin de délimiter une surface inférieure de taille suffisante pour permettre la pose d'une chape de fixation des deux points d'attache de l'articulation.

Or, la demanderesse s'est rendue compte que cet évasement du longeronnet provoquait une rupture d'inertie de ce dernier et donc un amortissement non constant en cas de choc du véhicule.

Un autre exemple typique de réalisation de dispositif de support de train arrière d'un véhicule automobile conforme au préambule de la revendication 1 est connu du document DE 3525251 A1. L'invention a pour objet de proposer un dispositif de support de train arrière qui permet de remédier à cet inconvénient.

A cet effet, l'invention a pour objet un dispositif de support de train arrière d'un véhicule automobile, du type précité, caractérisé en ce que :
- la portion de jonction est fixée sur le côté du bas de caisse à distance à l'avant par rapport à l'extrémité arrière du bas de caisse, de manière à ménager un espace intercalaire délimité transversalement entre le bas de caisse et le longeronnet, et
- le second point d'attache de l'articulation est fixé à une seconde surface solidaire du bas de caisse, de sorte que l'articulation chevauche l'espace intercalaire.

Grâce à l'invention, une surface de fixation de l'articulation importante n'est plus nécessaire, et on peut donc utiliser un longeronnet présentant peu d'évasement, c'est-à-dire dont la section transversale reste sensiblement constante.

Selon d'autres caractéristiques de l'invention :
- l'articulation s'étend au moins en partie dans l'espace intercalaire :
- l'articulation est une liaison pivot comprenant une tige formant stator solidaire par les deux points d'attache respectivement au longeronnet et au bas de caisse, et un cylindre formant rotor s'étendant en partie dans l'espace intercalaire;
- la première surface définie sur le longeronnet et la seconde surface solidaire du bas de caisse sont orientées vers le bas ;
- le longeronnet est tubulaire à section transversale rectangulaire, la première surface étant définie par la paroi inférieure du longeronnet ;
- la première surface est définie sur la partie de jonction du longeronnet.

L'invention concerne également une partie arrière de véhicule automobile comportant un dispositif de support de train arrière tel que défini précédemment et un passage de roue arrière correspondant au train arrière, situé derrière l'extrémité arrière du bas de caisse, le longeronnet contournant le passage de roue.

Selon une autre caractéristique de l'invention, la partie arrière comporte en outre un train arrière muni d'une tige de suspension d'un essieu, la tige de suspension étant reliée à l'articulation.

L'invention concerne également un véhicule automobile comprenant une partie arrière telle que définie précédemment.

L'invention sera mieux comprise à l'aide de la description qui va suivre, donnée uniquement à titre d'exemple, et faite en se référant aux dessins annexés, parmi lesquels :
- la figure 1 est une vue en perspective de dessous d'une partie arrière gauche d'un véhicule automobile,
- la figure 2 est une vue plane de dessous de la partie arrière, selon la direction Il indiquée sur la figure 1, et
- la figure 3 est une vue en coupe transversale de la partie arrière, selon le plan de coupe III indiqué sur la figure 2.

De manière générale, l'orientation des pièces sera donnée en référence à l'orientation habituelle du véhicule.

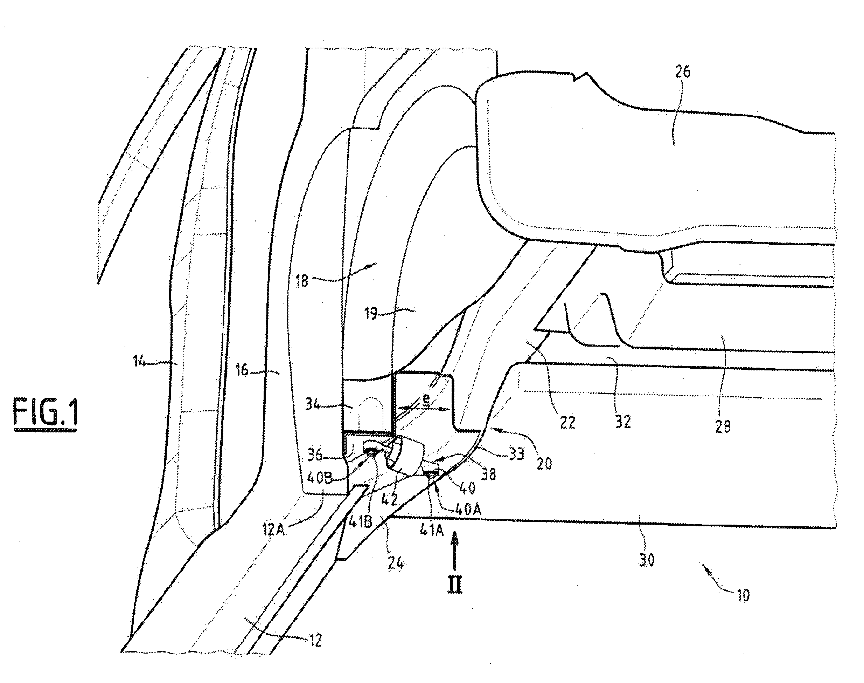

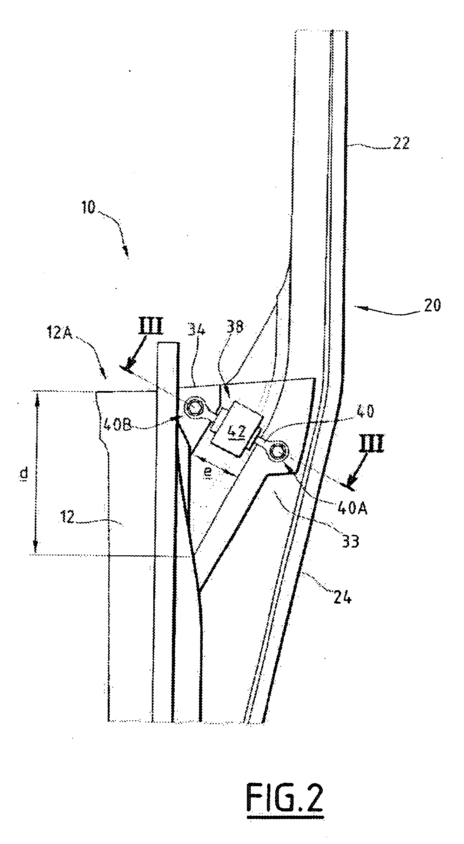

En référence aux figures 1 et 2, on a représenté une partie arrière gauche d'un véhicule automobile, désignée par la référence générale 10.

Cette partie arrière 10 comprend un bas de caisse longitudinal 12 duquel s'élève un montant de portière 14 et une partie d'encadrement 16 de roue arrière gauche (non représentée).

Le bas de caisse 12 forme une étroite bande de tôle soudée sur le côté du plancher (non représenté), pour accroître sa résistance.

Le bas de caisse 12 est muni d'une extrémité arrière 12A destinée à faire face à la roue arrière gauche lorsque cette dernière est montée.

Un passage de roue arrière 18 est monté sur le bas de caisse 12 et sur l'encadrement de roue 16. Le passage de roue 18 a la forme d'une demi-cuvette munie d'un fond 19 disposé transversalement à l'opposé du bas de caisse 12.

La partie arrière 10 comprend en outre un longeronnet arrière 20 de prolongement du bas de caisse 12 vers l'arrière, contournant le passage de roue 18. Ce longeronnet arrière 20 comprend une portion longitudinale 22 s'étendant à l'arrière du bas de caisse 12 et décalée transversalement par rapport au bas de caisse 12. Le longeronnet 20 comprend en outre une portion 24 de jonction avec le bas de caisse 12, fixée sur un côté interne, c'est-à-dire un côté dirigé vers l'intérieur du véhicule. Le longeronnet arrière 20 est terminé à l'arrière par une planche à talon 26 destinée à supporter le pare-choc arrière du véhicule.

Le longeronnet arrière 20 supporte en outre un plancher de charge 28, c'est-à-dire le plancher du coffre du véhicule, et en partie un planche arrière 30. Une traverse de plancher arrière 32 s'étend transversalement entre le plancher de charge 28 et le plancher arrière 30 à partir du longeronnet arrière 20. Le plancher arrière 30 et la traverse de plancher arrière 32 sont notamment destinés à supporter les sièges arrière du véhicule automobile.

La portion de jonction 24 est fixée sur le côté du bas de caisse 12, à une distance d à l'avant par rapport à l'extrémité arrière 12A du bas de caisse 12. Ainsi, un espace intercalaire e est délimité transversalement entre le bas de caisse 12 et le longeronnet 20. Cet espace intercalaire e diminue transversalement au fur et à mesure que la portion de jonction 24 se rapproche du bas de caisse 12.

Le longeronnet arrière 20 possède une section transversale rectangulaire formant, à l'extérieur, une surface horizontale 33 orientée vers le bas.

A son extrémité 12A, le bas de caisse 12 comporte une saillie transversale 34 en direction du longeronnet arrière 20. Cette saillie transversale 34 définie une surface 36 sensiblement horizontale orientée vers le bas.

La partie arrière 10 comprend en outre une articulation avant 38 d'un train arrière, destinée à être reliée à une tige de suspension d'un essieu (non représenté).

L'articulation 38 est une liaison pivot comprenant un stator sous forme d'une tige 40 dans laquelle est enfilé un cylindre 42 formant rotor de l'articulation 38.

La tige 40 présente à chaque extrémité un point d'attache 40A, 408. Un premier point d'attache 40A est fixé sur la surface 33 du longeronnet 20, tandis qu'un second point d'attache 40B est fixé à la surface 36 solidaire du bas de caisse 12. Ainsi, l'articulation 38 chevauche l'espace intercalaire e.

Dans l'exemple illustré, chaque point d'attache 40A, 40B est constitué d'une patte percée dans laquelle un système vis/écrou 41A, 41B vertical assure la fixation avec la surface de fixation respective.

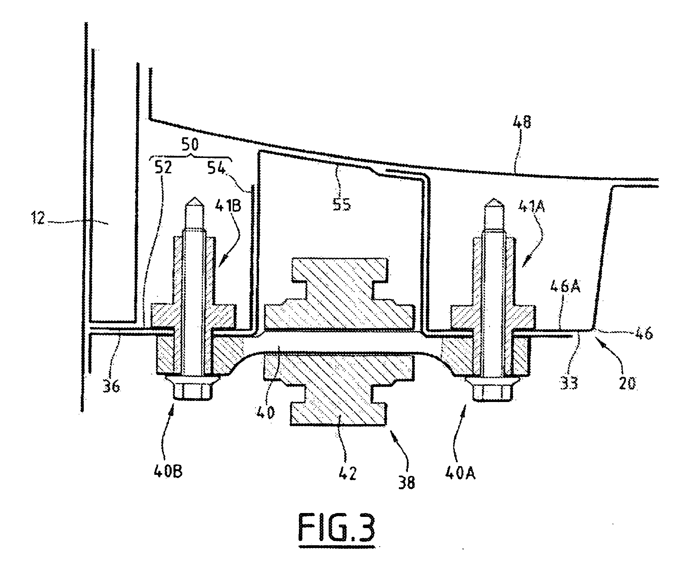

En référence à la figure 3, une description détaillée du longeronnet arrière 20, du bas de caisse 12 et de l'articulation 38 va être donnée.

Le longeronnet arrière 20 comporte une première feuille de tôle 46 pliée en U en coupe transversale et rapportée sur le dessous d'une seconde feuille de tôle 48, sensiblement horizontale. La seconde feuille de tôle 48 se prolonge transversalement jusqu'au bas de caisse 12, auquel elle est fixée. La paroi inférieure 46A de la première feuille de tôle 46 définit la première surface 33.

La saillie 34 est formée par une feuille de tôle 50 pliée en L en coupe transversale. Un premier pan horizontal 52 est fixé au bas de caisse 12 et un second pan 54 remonte verticalement, à distance du bas de caisse 12, en direction de la feuille de tôle 48 du longeronnet 20. La surface 36 est définie sur le pan 54. Une feuille de tôle supplémentaire 55 est disposée sur la saillie 34 et le longeronnet 20. Cette feuille de tôle 55 recouvre sur le bas les surfaces 36 et 33 et épouse le creux formé par l'espace intercalaire e, en s'étendant jusqu'à la feuille de tôle 48.

Ainsi, l'articulation 38 est fixée aux surfaces 36 et 33 par l'intermédiaire de la feuille de tôle supplémentaire 55.

On remarquera que les deux surfaces de fixation 36 et 33 sont à un niveau horizontal sensiblement identique, de sorte que la tige 40 s'étend sensiblement horizontalement, au plus près des surfaces 36 et 33.

De ce fait, le stator s'étend en partie, presque en moitié, dans l'espace intercalaire e.

Ainsi, l'articulation 38 se trouve à un niveau vertical supérieur à celui du longeronnet arrière 20, c'est-à-dire qu'au moins une partie de l'articulation 38 se trouve au-dessus du plan définit par la surface 33. Ce positionnement relevé de l'articulation 38 permet d'obtenir un meilleur comportement du train arrière lors du roulage du véhicule.

Comme le montre la description précédente, l'invention permet bien d'obtenir un longeronnet arrière 20 présentant une section transversale pratiquement constante sur toute sa longueur.

## Revendications

1. Dispositif de support de train arrière d'un véhicule automobile, du type comprenant :
- un bas de caisse (12) longitudinal muni d'une extrémité arrière (12A),
- un longeronnet (20) comprenant:
- une portion longitudinale (22) s'étendant à l'arrière du bas de caisse (12) et décalée transversalement par rapport à ce bas de caisse (12), et
- une portion de jonction (24) avec le bas de caisse (12), fixée sur un côté du bas de caisse (12), et
- une articulation (38) destinée à être reliée au train arrière, comprenant des premier et second points d'attache (40A, 40B), le premier point d'attache (40A) étant fixé à une première surface (33) définie sur le longeronnet (20),
**le dispositif étant caractérisé en ce que :**
- la portion de jonction (24) est fixée sur le côté du bas de caisse (12) à distance (d) à l'avant par rapport à l'extrémité arrière (12A) du bas de caisse (12), de manière à ménager un espace intercalaire (e) délimité transversalement entre le bas de caisse (12) et le longeronnet (20), et
- le second point d'attache (408) de l'articulation (38) est fixé à une seconde surface (36) solidaire du bas de caisse (12), de sorte que l'articulation (38) chevauche l'espace intercalaire (e).

2. Dispositif de support de train arrière selon la revendication 1, **caractérisé en ce que** l'articulation (38) s'étend au moins en partie dans l'espace intercalaire (e).

3. Dispositif de support de train arrière selon la revendication 2, **caractérisé en ce que** l'articulation (38) est une liaison pivot comprenant une tige (40) formant stator solidaire par les deux points d'attache (40A, 40B) respectivement au longeronnet (20) et au bas de caisse (12), et un cylindre (42) formant rotor s'étendant en partie dans l'espace intercalaire (e).

4. Dispositif de support de train arrière selon l'une quelconque des revendications 1 à 3, **caractérisé en ce que** la première surface (33) définie sur le longeronnet (20) et la seconde surface (36) solidaire du bas de caisse (12) sont orientées vers le bas.

5. Dispositif de support de train arrière selon la revendication 4, **caractérisé en ce que** le longeronnet (20) est tubulaire à section transversale rectangulaire, la première surface (33) étant définie par la paroi (46A) inférieure du longeronnet (20).

6. Dispositif de support de train arrière selon l'une quelconque des revendications 1 à 5, **caractérisé en ce que** la première surface (33) est définie sur la partie de jonction (24) du longeronnet (20).

7. Partie arrière de véhicule automobile comportant :
- un dispositif de support de train arrière selon l'une quelconque des revendications 1 à 6, et
- un passage de roue arrière (18) correspondant au train arrière, situé derrière l'extrémité arrière (12A) du bas de caisse (12),
le longeronnet (20) contournant le passage de roue (18).

8. Partie arrière de véhicule automobile selon la revendication 7, **caractérisé en ce qu'**il comporte en outre un train arrière muni d'une tige de suspension d'un essieu, la tige de suspension étant reliée à l'articulation (38).

9. Véhicule automobile comprenant une partie arrière selon la revendication 7 ou 8.

## Claims

1. Rear axle assembly mounting device for a motor vehicle, of the type comprising:
• longitudinal rocker panel (12) with a rear end (12a),
• an auxiliary longitudinal member (20) comprising:
• a longitudinal portion (22) extending to the rear of the rocker panel (12) and offset transversely with respect to this rocker panel (12), and
• a joining portion (24) where it joins the rocker panel (12), this portion being attached to one side of the rocker panel (12), and
• a joint (38) designed to be connected to the rear axle assembly, comprising first and second attachment points (40A, 40B), the first attachment point (40A) being attached to a first surface (33) defined on the auxiliary longitudinal member (20),
**the device being characterized in that:**
• the joining portion (24) is attached to the side of the rocker panel (12) at a distance (d) forward of the rear end (12A) of the rocker panel (12), in such a way as to create an intermediate gap (e) defined transversely between the rocker panel (12) and the auxiliary longitudinal member (20), and
• the second attachment point (40B) of the joint (38) is attached to a second surface (36) integral with the rocker panel (12), so that the joint (38) spans the intermediate gap (e).

2. Rear axle assembly mounting device according to Claim 1, **characterized in that** the joint (38) at least partly occupies the intermediate gap (e).

3. Rear axle assembly mounting device according to Claim 2, **characterized in that** the joint (38) is a pin joint comprising a rod (40) forming a stator integral, via the two attachment points (40A, 40B), to the auxiliary longitudinal member (20) and rocker panel (12), respectively, and a cylinder (42) forming a rotor partly occupying the intermediate gap (e).

4. Rear axle assembly mounting device according to any one of Claims 1 to 3, **characterized in that** the first surface (33) defined on the auxiliary longitudinal member (20) and the second surface (36) integral with the rocker panel (12) face downwards.

5. Rim axle assembly mounting device according to Claim 4, **characterized in that** the auxiliary longitudinal member (20) is tubular with a rectangular cross section, the first surface (33) being defined by the lower wall (46A) of the auxiliary longitudinal member (20).

6. Rear axle assembly mounting device according to any of Claims 1 to 5, **characterized in that** the first surface (33) is defined on the joining portion (24) of the auxiliary longitudinal member (20).

7. Rear section of a motor vehicle, comprising:
• a rear axle assembly mounting device according to any one of Claims 1 to 6, and
• a rear wheel well (18) corresponding to the rear axle assembly, situated behind the rear end (12A) of the rocker panel (12),
the auxiliary longitudinal member (20) passing around the wheel well (18).

8. Rear section of a motor vehicle according to Claim 7, **characterized in that** it also comprises a rear axle assembly with an axle suspension rod, the suspension rod being connected to the joint (38).

9. Motor vehicle comprising a rear section according to Claim 7 or 8.

## Patentansprüche

1. Vorrichtung zur Abstützung der Hinterachse eines Kraftfahrzeugs, jener Art, die Folgendes umfasst:
- einen Längstürschweller (12), der mit einem hinteren Ende (12A) versehen ist,
- einen kleinen Längsträger (20), der Folgendes umfasst:
- einen Längsteil (22), der sich rückwärtig des Türschwellers (12) erstreckt und in Querrichtung bezüglich des Türschwellers (12) versetzt ist, und
- einen Verbindungsteil (24) mit dem Türschweller (12), der an einer Seite des Türschwellers (12) befestigt ist, und
- ein Gelenk (38), das mit der Hinterachse verbunden werden soll und einen ersten und zweiten Befestigungspunkt (40A, 40B) aufweist, wobei der erste Befestigungspunkt (40A) an einer ersten Fläche (33) befestigt ist, die auf dem kleinen Längsträger (20) definiert ist,
wobei die Vorrichtung **dadurch gekennzeichnet ist, dass**:
- der Verbindungsteil (24) in einem Vorwärtsabstand (d) bezüglich des hinteren Endes (12A) des Türschwellers (12) an der Seite des Türschwellers (12) befestigt ist, um einen Zwischenraum (e) zu bilden, der in Querrichtung zwischen dem Türschweller (12) und dem kleinen Längsträger (20) definiert ist, und
- der zweite Befestigungspunkt (40B) des Gelenks (38) an einer zweiten Fläche (36) befestigt ist, die fest mit dem Türschweller (12) verbunden ist, so dass das Gelenk (38) den Zwischenraum (e) überlappt.

2. Vorrichtung zur Abstützung der Hinterachse nach Anspruch 1, **dadurch gekennzeichnet, dass** sich das Gelenk (38) zumindest teilweise in den Zwischenraum (e) erstreckt.

3. Vorrichtung zur Abstützung der Hinterachse nach Anspruch 2, **dadurch gekennzeichnet, dass** das Gelenk (38) eine Drehverbindung ist, die eine Stange (40), die einen Stator bildet, der durch die beiden Befestigungspunkte (40A, 40B) fest mit dem kleinen Längsträger bzw. dem Türschweller (12) verbunden ist, und einen Zylinder (42), der einen sich teilweise in den Zwischenraum (e) erstreckenden Rotor bildet, umfasst.

4. Vorrichtung zur Abstützung der Hinterachse nach einem der Ansprüche 1 bis 3, **dadurch gekennzeichnet, dass** die an dem kleinen Längsträger (20) definierte erste Fläche (33) und die fest mit dem Türschweller (12) verbundene zweite Fläche (36) nach unten ausgerichtet sind.

5. Vorrichtung zur Abstützung der Hinterachse nach Anspruch 4, **dadurch gekennzeichnet, dass** der kleine Längsträger (20) röhrenförmig ist und einen rechteckigen Querschnitt aufweist, wobei die erste Fläche (33) durch die untere Wand (46A) des kleinen Längsträgers (20) definiert ist.

6. Vorrichtung zur Abstützung der Hinterachse nach einem der Ansprüche 1 bis 5, **dadurch gekennzeichnet, dass** die erste Fläche (33) an dem Verbindungsteil (24) des Längsträgers (20) definiert ist.

7. Heckteil eines Kraftfahrzeugs, das Folgendes umfasst:
- eine Vorrichtung zur Abstützung der Hinterachse nach einem der Ansprüche 1 bis 6 und
- einen Hinterradlauf (18), der der Hinterachse entspricht und sich hinter dem hinteren Ende (12A) des Türschwellers (12) befindet,
wobei der kleine Längsträger (20) um den Radlauf (18) herumführt.

8. Heckteil eines Kraftfahrzeugs nach Anspruch 7, **dadurch gekennzeichnet, dass** es des Weiteren eine Hinterachse aufweist, die mit einer Aufhängungsstange einer Achse versehen ist, wobei die Aufhängungsstange mit dem Gelenk (38) verbunden ist.

9. Kraftfahrzeug, das ein Heckteil nach Anspruch 7 oder 8 enthält.
